# EUROPEAN PATENT SPECIFICATION

(11) **EP 3 560 398 B1**
(45) Date of publication and mention of the grant of the patent: **03.11.2021**
(21) Application number: 19275061.0
(22) Date of filing: 29.04.2019
(51) Int. Cl.: A47J 37/08, A47J 27/21, A47J 27/212

(54) **DOMESTIC COUNTERTOP APPLIANCES**
HAUSHALTSGERÄT FÜR DIE ARBEITSPLATTE
APPAREILS DE COMPTOIR DOMESTIQUES

(30) Priority: 27.04.2018 GB 201806962
(43) Date of publication of application: 30.10.2019
(73) Proprietor: Strix Limited, Ronaldsway, Isle of Man IM9 2RG (GB)
(72) Inventor: MANDER, Paul Hayden, Shropshire, Shropshire TF9 2NA (GB)
(74) Representative: Dehns

(56) References cited:
- EP-A1- 2 033 549
- GB-A- 2 400 303
- GB-A- 2 444 714
- US-A1- 2003 164 364

## Description

The present invention relates to domestic countertop appliances, and in particular to appliances such as kettles and toasters.

It is well known that domestic countertop appliances, such as kettles and toasters, often comprise an indicator light arranged to indicate the operational state of the appliance. For example, kettles typically comprise an indicator light which is illuminated when the kettle is on, i.e. when it is heating the water contained therein. Such indicator lights are typically directly associated with, for example, an ON switch, i.e. they are an integral part of, or located immediately next to, the ON switch. One of the problems of this particular arrangement of indicator light and ON switch is that the illumination of the indicator light can often only be seen from a relatively small viewing angle. This can make it difficult for a user to easily determine the operational state of the appliance, e.g. when viewing the appliance from a side that does not face the ON switch.

GB 2444714 A discloses a water heating appliance, the base of which comprises apertures for receiving moulded plastic apertures arranged to be illuminated by illumination means.

US 2003/164364 A1 discloses a kettle provided with LEDs in the base of the kettle that project through holes onto a power supply stand.

EP 2033549 A1 discloses a tea machine having illumination means to illuminate a boiling water receptacle.

GB 2 400 303 A discloses a kettle comprising a power supply base, the power supply base comprising indicators to indicate current is flowing.

According to a first aspect of the present invention there is provided a domestic countertop appliance as claimed in claim 1.

It will be appreciated that projecting light from the first light source towards the first portion, comprising multiple ones of the plurality of windows, creates an illumination effect on the exterior wall of the appliance which is visible to a user. This illumination effect may be used, for example, to indicate to a user the operational state of the appliance. It will be further appreciated that the plurality of windows being distributed across the exterior wall is advantageous as the multiple windows of the illuminated first portion can cover an area extending across the exterior wall, thus being more visible than the localised illumination effect provided by conventional indicator lights in prior art appliances. The distributed arrangement of the windows means that the first portion of multiple windows may extend over a larger area than known previously and this may increase the viewing angle from which the resulting illumination effect can be seen, thus making the appliance more user friendly.

In one or more preferred embodiments, the plurality of at least partially transparent windows may be distributed across the exterior wall from one side of the exterior wall to another side of the exterior wall. In such embodiments the plurality of windows is not arranged in a localised area of the exterior wall but instead covers an area of the exterior wall extending from one side to another. Of course the entire exterior wall may not be covered by the distribution of windows, but an area extending from side to side in at least one direction may be covered, for example an area extending horizontally, vertically or diagonally from side to side of the exterior wall. When the plurality of windows is distributed across an area extending from one side of the at least one exterior wall to the other side of the at least one exterior wall, it will be recognised that the windows are present over a relatively large extent of the exterior surface of the appliance, especially when compared to the localised presence of indicator lights on prior art appliances.

As will be appreciated by those skilled in the art, the location of the one side, and the other side, of the exterior wall will depend on the specific shape and arrangement of the exterior wall. If, for example, the at least one exterior wall has a cylindrical, frustoconical or other curved shape, e.g. similar to an exterior wall of a typical kettle, it should be understood that the one side of the exterior wall may be the side when viewed from a first viewing angle relative to the appliance, and the other side may be the side of the exterior wall when viewed from a second viewing angle substantially opposite to (i.e. at 180° from) the first viewing angle. Alternatively, if, for example, the at least one exterior wall is a flat wall, e.g. a side wall of a toaster, it will be understood that the plurality of windows may be distributed across the exterior wall from one side of the wall, i.e. from one edge of an outward face of the wall, towards an opposing side of the wall, i.e. to another edge of the outward face of the wall.

The first portion comprising multiples ones of the plurality of windows may comprise all of the plurality of windows on the at least one exterior wall. However, there may be further light sources, as will be discussed in more detail below, arranged to project light into further portions of the plurality of windows, and so the first portion may not necessarily include all of the plurality of windows.

The plurality of at least partially transparent windows may be translucent such that the light can be seen through them. However, such translucent windows may be unsuitable for use when the external light conditions are bright as illumination windows may be difficult to determine. Accordingly, in a preferred set of embodiments, the at least partially transparent windows are fully transparent. Such a set of embodiments is advantageous as it may ensure that the illuminated windows can be seen in all light conditions. Such transparency may be achieved, for example, by using a material for the windows which is transparent, e.g. glass or Perspex. Alternatively, the windows may be provided as open holes extending through the entire depth of the exterior wall(s) such that light is unimpeded passing therethrough, and thus are effectively transparent.

Where the appliance comprises multiple exterior walls, one or more of the exterior walls may comprise a plurality of at least partially transparent windows, however it is not essential that all of the exterior walls comprise a plurality of at least partially transparent windows distributed thereacross. For example, if the appliance has a cuboid shape with four exterior walls then two out of the four exterior walls may comprise a plurality of at least partially transparent windows distributed thereacross and the other two exterior walls may be devoid of such a distribution of windows. As mentioned above, any exterior wall that does have windows distributed thereacross may preferably have the plurality of windows distributed across the exterior wall from one side of the exterior wall to another side of the exterior wall.

The first light source may arranged within the appliance in any suitable manner such that light produced from the first light source ultimately passes out through the first portion of the plurality of windows. The first light source may be arranged to project light directly through the first portion comprising multiples ones of the plurality of at least partially transparent windows, e.g. the light source may be arranged directly behind these windows. However, direct transmission is not essential and the first light source may instead be arranged to project light within the appliance such that at least a portion of the light is first reflected off one or more internal surface(s) within the appliance before passing out through the windows. The light projected from the first light source may even pass through the volume of fluid in the heating chamber.

In a further set of embodiments the first light source is arranged to direct light into a light diffusing element arranged to project light towards the first portion comprising multiples ones of the plurality of at least partially transparent windows. The light diffusing element may be arranged behind these windows. The Applicant has recognised that, by projecting light into a light diffusing element, it may be possible to obtain a more even distribution of the light through the windows. In such a set of embodiments, the light from the first light source is first projected into the light diffusing element along which the light diffuses before passing out of the light diffusing element towards the windows. The use of a light diffusing element may also make it possible to reduce the total number of light sources required to illuminate all of the plurality of windows and it may make it possible, depending on the specific arrangement, to illuminate all the windows using only the first light source.

The shape and configuration of the light diffusing element will largely depend on the type of appliance and the arrangement of the one or more exterior wall(s). For example, if the appliance comprises two flat walls, each of which comprises a plurality of windows, the light diffusing element may be in the form of two separate, straight lengths of light diffusing element. Nonetheless, in a preferred set of embodiments, the light diffusing element extends around the periphery of the heating chamber. The light diffusing element may be located inside or outside the heating chamber, for example depending on the transparency of the wall(s) forming the heating chamber. The light diffusing element may, for example, be in the form of a circular ring for an appliance comprising cylindrical walls.

The heating chamber which defines the volume of fluid to be heated may be constructed by any suitable means.

The appliance further comprises an inner wall forming the heating chamber and the one or more exterior wall(s) extend around the inner wall. At least a portion of the one or more exterior wall(s) is separated from the inner wall to define a space therebetween. This arrangement of an inner wall inside the exterior wall(s) effectively forms a double-walled appliance. The Applicant has recognised that such an arrangement is advantageous as the one or more exterior wall(s) do not necessarily need to be designed so as to be capable of, for example, retaining a fluid as may be the case were the heating chamber to be directly formed by the one or more exterior wall(s), i.e. a single-walled appliance. This carries the advantage that it permits more design freedom in how the plurality of at least partially transparent windows are provided on or in the one or more exterior wall(s). For example, the windows may be provided by holes extending through the entire depth of the one or more exterior wall(s).

Furthermore, it will be appreciated that a double-walled appliance provides more flexibility in the choice of materials for the inner wall and the one or more exterior wall(s), especially when designing the plurality of at least partially transparent windows that allow light to pass through the exterior wall(s). In at least some embodiments, the inner wall consists of an opaque material. It will be understood that this means opaque to visible wavelengths of light. For example, the inner wall may consist of a metallic material or an opaque plastics material. It will be understood that light generated by the first light source does not pass through an opaque inner wall and therefore cannot be viewed in an interior of the appliance. In such embodiments, the fluid to be heated in the interior of the appliance is not illuminated.

In a preferred set of embodiments, the plurality of at least partially transparent windows is arranged to allow light to pass through said exterior wall(s) to be viewed from an exterior of the appliance. The windows therefore provide an external illumination effect. An advantage of the double-walled construction is that the material(s) of the exterior wall(s) may be chosen independently of the inner wall to achieve a desired transparency for the windows. In at least some embodiments, the one or more exterior wall(s) consist of one or more materials that are different to the material of the inner wall. For example, the one or more exterior wall(s) may consist of a non-metallic material, e.g. a glass or plastics material. The one or more exterior wall(s) may comprise multiple layers, for example a first layer of glass or plastics material that is at least partially transparent and a second layer of glass or plastics material that is less transparent or opaque (except for the windows). This is discussed further below.

In embodiments wherein a light diffusing element extends around the periphery of the heating chamber, the light diffusing element may be arranged to extend around the inner wall, preferably in the space between the inner wall and the one or more exterior wall(s).

In a further set of embodiments, the plurality of at least partially transparent windows are arranged in the portion of the one or more exterior wall(s) that is separated from the inner wall, i.e. arranged adjacent to the space between the inner wall and one or more exterior wall(s). In a yet further set of embodiments the first light source is arranged to project light into the space between the inner wall and the one or more exterior wall(s). In at least some embodiments, the first light source is located in the space between the inner wall and the exterior wall(s). In some preferred embodiments, the appliance may further comprise a mounting bracket arranged to support the first light source in the space between the inner wall and the one or more exterior wall(s).

The Applicant has recognised that it may be easier for a user to see the illumination of the windows when there is a better contrast between the windows and the rest of the exterior wall(s). Accordingly, it may be beneficial for light to only be able to pass through the plurality of at least partially transparent windows. Therefore, in a preferred set of embodiments, the at least one exterior wall is otherwise opaque. It will be understood that this means opaque to visible wavelengths of light. As will be appreciated, in such a set of embodiments, the plurality of at least partially transparent windows will be the only part of the at least one exterior wall which allows visible light to pass through. However, this is not essential and the at least one exterior wall may be otherwise partially transparent to a lesser degree than the plurality of windows.

As will be appreciated by those skilled in the art, one of the differences between an appliance according to embodiments of the present invention and typical prior art domestic appliances is the presence of a plurality of at least partially transparent windows which may be illuminated, compared to the typical single indicator light on prior art appliances. The number of windows may depend on the size and shape of the appliance, along with the desired illumination effect, among various other factors. Nonetheless, in a set of embodiments, the plurality of at least partially transparent windows comprises at least 20 windows, preferably at least 50 windows, and more preferably at least 100, 200, 300, 400 or 500 windows. Furthermore, in one or more embodiments, the first portion (i.e. illuminated by the first light source) may comprise at least 10, 20, 30, 40, 50, 60, 70, 80, 90 or 100 of the plurality of at least partially transparent windows.

In addition, or alternatively, the plurality of at least partially transparent windows on the one or more exterior wall(s) may have any suitable arrangement. For example, the plurality of at least partially transparent windows may have a random arrangement or be arranged so as to form a specific pattern or design, e.g. the plurality of windows may be arranged to form a shape or lettering. In a preferred set of embodiments, the plurality of at least partially transparent windows is arranged in a uniform array. In a further preferred set of embodiments, the plurality of at least partially transparent windows is arranged in a geometric pattern. The windows may, for example, be arranged in a series of rows or columns along the one or more exterior wall(s). Furthermore, in one or more embodiments, the first portion may comprise multiple ones of the plurality of at least partially transparent windows arranged in a series of row or columns.

The plurality of at least partially transparent windows may have any suitable size and spacing. In a set of embodiments, the plurality of at least partially transparent windows may be distributed across the at least one exterior wall so as extend over at least 20%, preferably at least 25%, more preferably at least 30% of a surface area of the at least one exterior wall. The Applicant has recognised that by covering such a substantial surface area of the at least one exterior wall, the viewing angle of the windows may be increased thus making it easier, for example, to determine the operational state of the appliance. Furthermore, in one or more embodiments, the first portion may comprise multiple ones of the plurality of at least partially transparent windows which are distributed across the at least one exterior wall so as extend over at least 10%, preferably at least 15%, more preferably at least 20% of a surface area of the at least one exterior wall.

As mentioned above, one of the advantages of having the plurality of at least partially transparent windows is that it may be possible to see the light emitted from the appliance from a wider angle. According to a further set of embodiments, the plurality of at least partially transparent windows is distributed across the at least one exterior wall so as to extend around an entire periphery of the appliance. Such a set of embodiments is advantageous as it may allow the plurality of windows to be seen all the way around the appliance.

The Applicant has recognised that it may be possible to illuminate a large number of the plurality of windows using a single light source. Therefore, in a set of embodiments, the appliance comprises only the first light source. This may keep the cost of the appliance to a minimum and reduce the amount of wiring required to provide the illumination. Depending on the distribution of the plurality of windows, and the specific light source, along with various other factors, such a set of embodiments may further require the presence of a light diffusing element, as discussed previously, to ensure that light projected from the light source is able to project out through all of the plurality of windows.

In an alternative set of embodiments, the appliance comprises at least one further light source arranged to project light towards at least a second portion comprising different multiple ones of the plurality of at least partially transparent windows. The Applicant has recognised that by providing at least one further light source it may be possible to obtain a more even distribution of light towards the plurality of at least partially transparent windows. The at least one further light source may comprise, for example, two, three, four, five, six, seven, eight, nine, ten or more light sources. Each additional light source may be arranged to direct light towards at least a further portion comprising different multiple ones of the plurality of at least partially transparent windows.

In embodiments wherein the appliance comprises the first light source and at least one further light source, the appliance may further comprise a mounting bracket arranged to support the first light source and at least one further light source in the space between the inner wall and the one or more exterior wall(s). In at least some embodiments, the mounting bracket is arranged in the space to extend around the periphery of the inner wall. It will be appreciated that such a mounting bracket advantageously allows for the light source(s) to be supported in this space without needing to accommodate the light source(s) elsewhere in the appliance, for example in a compartment containing the heating arrangement, typically provided below the heating chamber.

The Applicant has also recognised that the presence of at least one further light source may make it possible to provide a more sophisticated illumination of the windows and thus potentially provide more information to a user. Accordingly, in a further set of embodiments, the first light source and the at least one further light source are arranged so as to be independently controlled. For example, the first light source and at least one further light source may be arranged such that they can be independently turned on or off, and/or so that their brightness may be independently adjusted, and/or so that their colour can be independently changed. Through control of various parameters such as those discussed above, various illumination effects may be created on the exterior wall(s) of the appliance. These effects may make it possible to display to a user more information than just whether the appliance is on or off. For example, in the case of a kettle, such controlled illumination effects may be used to provide an indication of the temperature of the water within the kettle. Control of the lights sources may be achieved using any suitable arrangement, for example an electronic controller, an analogue circuit, or other suitable means.

The first light source, and the at least one further light source, may comprise any suitable light emitting means, for example a light emitting diode (LED) or a standard light bulb.

The plurality of at least partially transparent windows may be comprised in the one or more exterior wall(s) in any suitable manner. In a set of embodiments, the plurality of at least partially transparent windows comprises holes extending through at least part of the depth of the one or more exterior wall(s). As will be appreciated, holes which extend through at least part of the depth of the one or more exterior wall(s) will provide a section of the wall which comprises less material than the rest of the exterior wall and thus may be at least partially transparent to light. An advantage of extending through only part of the wall is that it may still be possible to keep the interior space behind the walls substantially watertight. However, in a preferred set of embodiments, the holes extend through the entire depth of the one or more exterior wall(s). This may be facilitated by providing an inner wall as described above. Such a set of embodiments may increase the brightness of the illuminated windows and/or simplify manufacture.

The Applicant has recognised that providing holes in the one or more exterior wall(s) is not the only way in which the plurality of windows may be provided. In an alternative set of embodiments, at least part of the one or more exterior wall(s) is provided by an at least partially transparent material and the plurality of at least partially transparent windows are defined in or by a less transparent layer applied to or formed in the one or more exterior wall(s). It will be appreciated that an absence of material in the less transparent layer may define a window allowing light to pass through after passing through the at least partially transparent material of the underlying part of the one or more exterior wall(s). For example, the less transparent layer may be discontinuous or otherwise comprise an array of apertures to define the plurality of windows. The at least partially transparent material, may, for example, comprise plastic or glass. In a preferred set of embodiments, the less transparent layer is opaque. This layer may be applied to or formed on the inside surface, outside surface or both surface(s) of the one or more exterior wall(s). For example, at least part or all of the one or more exterior wall(s) may comprise an at least partially transparent plastics or glass material as a first layer, and further comprise a less transparent or opaque material as a second layer, e.g. the second layer being printed, coated or wrapped on the exterior of the first layer. The plurality of windows may be formed in any suitable way in the second layer.

The less transparent layer may be provided by any suitable means. In a set of embodiments the less transparent layer is provided by a piece of material wrapped onto the one or more exterior wall(s). The piece of material may, for example, comprise a sheet of material comprising the plurality of holes, e.g. perforations. Alternatively, the less transparent layer may consist of a layer precisely sprayed onto the one or more exterior wall(s), e.g. in a spraying pattern that results in windows being defined in the less transparent layer.

In a set of embodiments, the appliance further comprises at least one user input device, and wherein the plurality of at least partially transparent windows is separate from the at least one user input device. The at least one user input device may, for example, comprise an ON/OFF switch, a button or a dial. The appliance may comprise a plurality of input devices. Each of the input devices may also comprise its own indicator light, but separate from the first light source (and any further light source(s)) and separate from the plurality of at least partially transparent windows.

In a set of embodiments, the appliance is a liquid heating vessel such as a kettle, i.e. an appliance arranged to contain and heat a static volume of liquid. As will be appreciated by those skilled in the art, in such a set of embodiments, the fluid to be heated is a liquid, e.g. water, milk, or various beverages. In such a set of embodiments the heating arrangement may comprise an immersed sheathed heating element in the heating container, or an underfloor heater arrangement comprising a heating element mounted underneath the heaing chamber and arranged to heat the liquid contained therein.

In an alternative set of embodiments, the appliance is a food cooking appliance such as a toaster, i.e. an appliance arranged to heat, typically via radiant heat, at least a surface of a food item. As will be appreciated by those skilled in the art, in such a set of embodiments, the fluid to be heated is a gas, i.e. the air within the heating chamber. In such a set of embodiments the appliance may comprise the necessary means to support a food item, for example at least one slice of bread, within the heating chamber. Additionally, in such a set of embodiments, the heating arrangement may comprise a set of resistance wires or another suitable radiant heating element.

The material from which the one or more exterior wall(s) is made from may depend on the type of appliance. For example, the one or more exterior wall(s) may be made from glass, metal (e.g. stainless steel), or plastic (e.g. polypropylene).

Some preferred embodiments of the present invention will now be described, by way of example only, and with reference to the accompanying drawings, in which:
Fig. 1 shows a first perspective view of a corded kettle in accordance with an embodiment of the invention;
Fig. 2 shows a second perspective view of the corded kettle seen in Figure 1;
Fig. 3 shows a first perspective view of a cordless kettle, and associated power base, in accordance with another embodiment of the invention;
Fig. 4 shows a second perspective view of the cordless kettle seen in Figure 3;
Fig. 5 shows a cross-sectional view of the cordless kettle seen in Figure 3;
Fig. 6 shows a perspective view of the cordless kettle seen in Figure 3, wherein the exterior wall is removed;
Fig. 7 shows a perspective view of the base components of the cordless kettle seen in Figure 3; and
Fig. 8 shows a perspective view of a toaster in accordance with a further embodiment of the present invention.

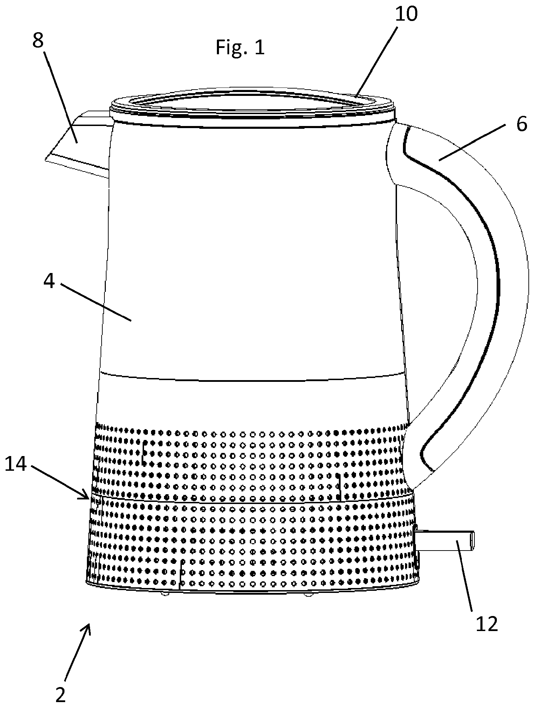

There is seen in Figure 1 a first perspective view, when viewed from a first side, of a corded kettle 2 in accordance with an embodiment of the present invention. In this view the power cord which supplies power to the kettle 2 is not shown. The kettle 2 comprises a frustoconical body defined by a frustoconical exterior wall 4. The kettle 2 comprises a handle 6, mounted to the exterior wall 4, for lifting the kettle 2 by and a spout 8 arranged at the top of the exterior wall 4 for dispensing a liquid from the kettle 2. The kettle 2 further comprises a lid 10 arranged to close the heating chamber, i.e. the interior space, within the exterior wall 4. The kettle 2 further comprises a power switch 12, located below the handle 6 and extending through the exterior wall 4, which may be used to operate the kettle 2, e.g. to turn the kettle on and off. The exterior wall 4 may be made of any suitable metallic, glass or plastics material.

The exterior wall 4 comprises, in its lower half, a plurality of at least partially transparent windows 14. In this particular embodiment, the plurality of at least partially transparent windows 14 are formed by holes extending through the entire thickness of the exterior wall 14, and are thus completely transparent. For example, the plurality of at least partially transparent windows 14 may be formed by holes in a metallic exterior wall 4.

In other embodiments, the plurality of windows 14 may instead be formed by at least partially transparent areas formed in a layer of an otherwise opaque or less transparent material. It will be appreciated that the layer of otherwise opaque or less transparent material may be printed or wrapped onto an underlying layer of at least partially transparent or more transparent material, for example an underlying layer of glass or plastics material. Thus the exterior wall 4 may comprise multiple layers, for example a first layer of glass or plastics material that is at least partially transparent and a second layer of glass or plastics material that is less transparent, or opaque, except for the plurality of windows 14 formed therein.

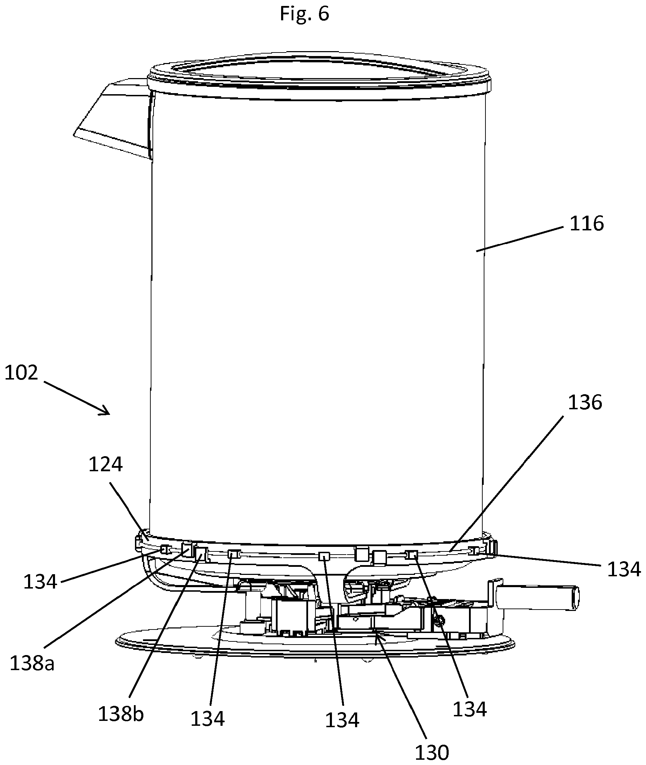

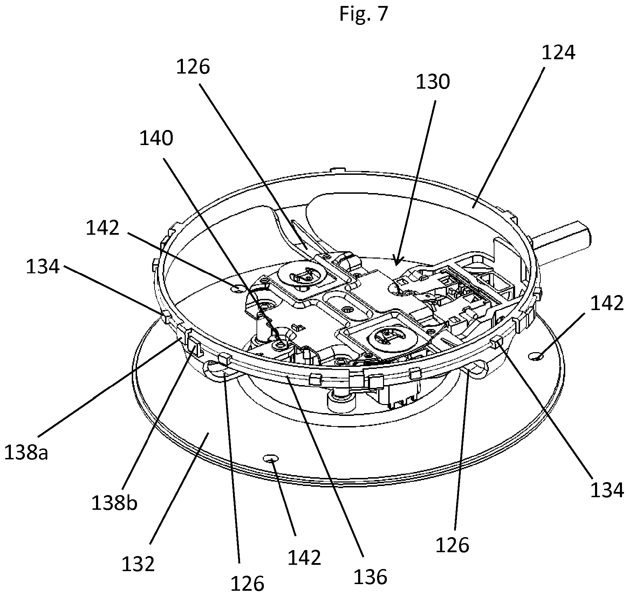

When the kettle 2 is turned on, via operation of the power switch 12, the plurality of transparent windows 14 will be illuminated by a light source (not shown) arranged behind the exterior wall 4 in an inside space within the kettle 2. A suitable light source can be seen in Figures 6 and 7.

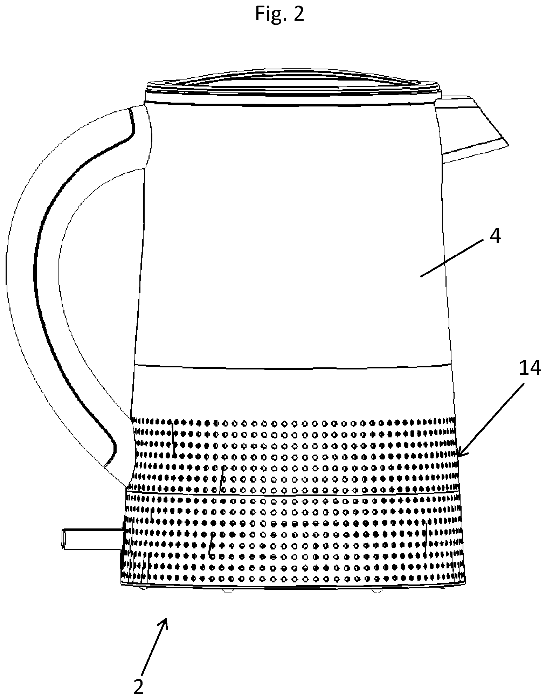

Figure 2 shows a second perspective view of the corded kettle 2 seen in Figure 1, when viewed from the opposite side of the kettle 2, i.e. from a direction 180° around the kettle 2 relative to the first viewing angle seen in Figure 1. As can be seen from both Figures 1 and 2, the plurality of transparent windows 14 is distributed across the exterior wall 4 to extend all the way around the periphery of the kettle 2. Additionally, it is apparent from these Figures that the plurality of transparent windows extends over at least 30% of the height of the exterior wall 4, and thus arranged over at least 30% of the surface area of the exterior wall 4. It is also apparent how the plurality of transparent windows 14 is arranged in a uniform array comprising rows of windows 14.

Due to the plurality of transparent windows 14 extending fully around the exterior wall 4 of the kettle 2, and across a significant portion of the height of the kettle 2, a user can easily see from a wide range of viewing angles around the kettle 2 whether the kettle 2 is switched on or not.

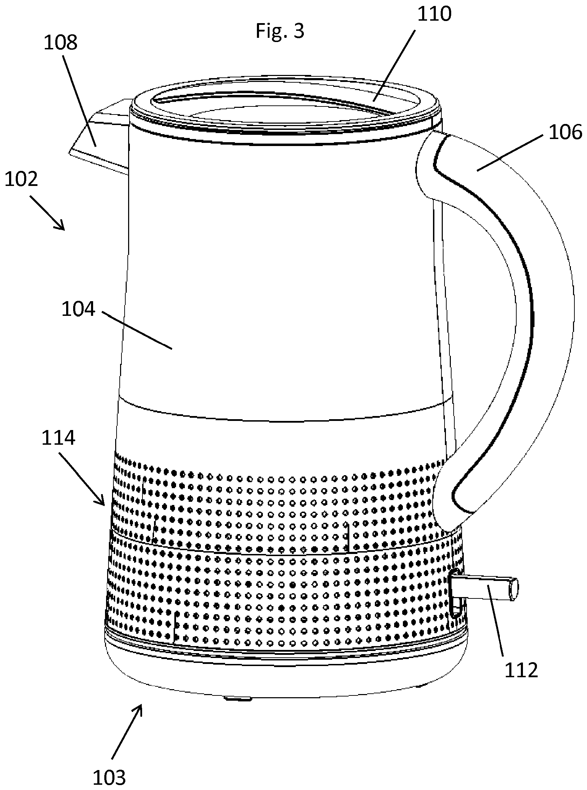

There is seen in Figure 3 a perspective view, when viewed from a first side, of a cordless kettle 102 and associated corded power base 103. The power cord for supplying power to the power base 103, and thus the cordless kettle 102, is not shown in this Figure. Similarly to the embodiment seen in Figures 1 and 2, the cordless kettle 102 comprises an exterior wall 104, to which a handle 106, for lifting the kettle 102 by, is mounted. The kettle 102 further comprises a spout 108 and a lid 110. Arranged below the handle 106 is a power switch 112 which extends through the exterior wall 104 to a kettle control (not seen in this Figure). Arranged in the lower half of the exterior wall 104 is a plurality of at least partially transparent windows 114. Similarly to the embodiment seen in Figures 1 and 2, the plurality of at least partially transparent windows 114 is formed by holes extending through the entire thickness of the exterior wall 104 and thus the plurality of transparent windows 114 is fully transparent. However, as discussed above, the plurality of windows 114 may instead be formed by at least partially transparent areas formed in a layer of an otherwise opaque or less transparent material.

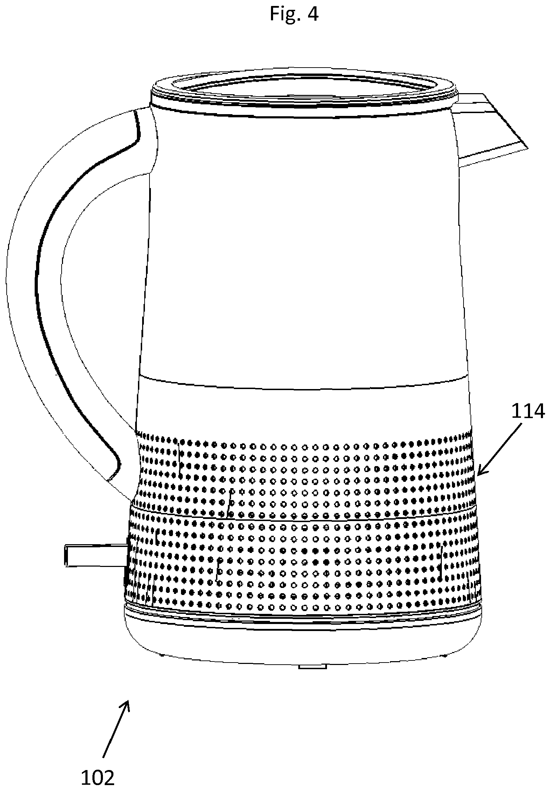

Figure 4 shows a second perspective view of the cordless kettle 102 seen in Figure 3, when viewed from the opposite side of the kettle 102, i.e. from a direction 180° around the kettle 102 relative to the first viewing angle seen in Figure 3. As can be seen from both Figures 3 and 4, the plurality of transparent windows 114 is distributed across the exterior wall 104 to extend all the way around the periphery of the kettle 102. Additionally, it is apparent from these Figures that the plurality of transparent windows extends over at least 30% of the height of the exterior wall 104, and thus arranged over at least 30% of the surface area of the exterior wall 104. It is also apparent from Figures 3 and 4 how the plurality of transparent windows 114 is arranged in a uniform array comprising rows of windows 114.

Accordingly, similarly to the kettle 2 seen in Figures 1 and 2, due to the plurality of transparent windows 114 extending fully around the exterior wall 104 of the kettle 102, and up a significant portion of the height of the kettle 102, a user can easily see from a wide range of viewing angles whether the kettle 102 is switched on.

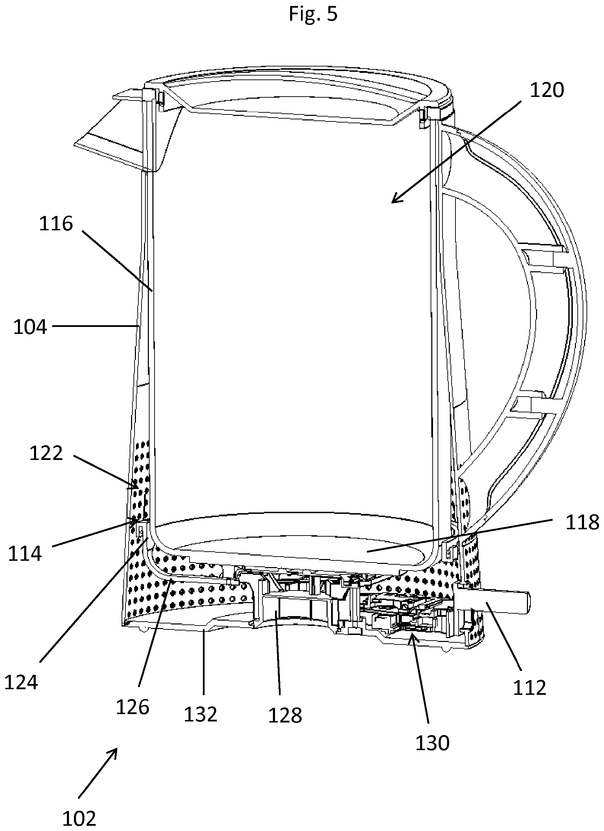

Figure 5 shows a cross-sectional perspective view of the cordless kettle 102 seen in Figures 3 and 4. The kettle 102 is of the 'double-walled' construction and thus comprises an inner wall 116. The inner wall 116 has a cylindrical shape and comprises a closed base 118. The inner wall 116 and closed base 118 together form a heating chamber 120 in which a volume of liquid, e.g. water, may be contained for heating, i.e. a liquid heating chamber. The inner wall 116 consists of an opaque material, e.g. a metallic material.

The arrangement of the exterior wall 104 and inner wall 116 defines a space 122, i.e. a compartment, located between the exterior wall 104 and the inner wall 116. As can be seen in Figure 5, the plurality of transparent windows 114 is arranged in the exterior wall 104 such that the plurality of transparent windows 114 is adjacent to the space 122. Arranged in the space 122 is a mounting bracket 124 to which a plurality of LEDs (not shown in this Figure) are mounted. These LEDs can be seen in Figures 6 and 7. The mounting bracket 124 comprises a plurality of support arms 126 which act to hold the mounting bracket 124 in the space 122.

Also visible in Figure 5 is the presence of a cordless electrical connector in the form of a 360° cordless connector 128 arranged at the base of the kettle 102. The 360° cordless connector 128 is electrically connected to a control and heating arrangement 130 which is operatively connected to the power switch 112. The base of the cordless kettle 102 is closed by a circular base plate 132, through which the 360° cordless connector 128 passes. In this particular embodiment there is provided a 360° cordless connector 128, however this is not essential and any form of cordless connector may be employed.

Figure 6 shows a perspective view of the cordless kettle 102 with the exterior wall 104 removed. As can be seen from this Figure, the mounting bracket 124 extends around the cylindrical inner wall 116. In this particular embodiment, the mounting bracket 124 extends all the way around the inner wall 116, however depending on the arrangement, and number, of light sources this may not be essential. Mounted to the mounting bracket 124 is a plurality of LEDs 134 which form a plurality of light sources. The LEDs 134 are electrically connected to one another and arranged along a strip 136 which is also connected to the control 130 in order to supply the LEDs 134 with power. The strip 136 may be a self-adhesive tape for ease of assembly with the mounting bracket 124. If the LEDs 134 operate at a lower voltage than the control 130 (e.g. 12V as compared to 240V mains), then a voltage driver may be connected between the strip 136 and the control 130. For example, a dropping resistor may be integrated into the strip 136 or else mounted on a separate PCB (together with an optional capacitor). The mounting bracket 124 further comprises a plurality of first and second mounting lugs 138a, 138b which extend vertically downward and upward, respectively. The first and second mounting lugs 138a, 138b act to secure the strip 136 in position on the mounting bracket 124 and thus securely hold the LEDs 134 against the mounting bracket 124. The LEDs 134 are orientated such that at least the majority of the light produced by each LED is directed towards the plurality of transparent windows 114 in the exterior wall 104 (not seen in this Figure). In other embodiments, the LEDs 134 may be replaced by neon or halogen bulbs.

Referring to Figures 5 and 6, light generated by each LED 134 propagates into the space 122 between the inner wall 116 and exterior wall 104 and out through the plurality of windows 114. The number of LEDs 134, i.e. light sources, required to illuminate the plurality of windows 114 will, at least partially, depend on the beam angle, i.e. the angle at which light is emitted from the LEDs. It may be necessary, for example, to use an LED with a wide beam angle so as to project light towards, and thus illuminate, as many of the plurality of windows 114 as possible.

Figure 7 shows a perspective view of the base components of the cordless kettle 102. As can be seen from this Figure, the mounting bracket 124 is in the form of a circular ring, around which the LEDs 134 are equally spaced. In this embodiment the mounting bracket 124 comprises three support arms 126 for holding the mounting bracket 124 in a fixed position. The support arms 126 are spaced equiangular around the mounting bracket 124. The supporting arms 126 are each attached to a respective screw hole 140 provided on the control 130. In this particular embodiment the control 130 is a standard kettle control already comprising the screw holes 140 to which the support arms 126 are attached. It will be appreciated that this design makes efficient use of the screw holes 140 which are already present in the standard control and thus avoids the need to provide separate mounting holes in the control 130. The base plate 132, which closes the base of the kettle 102, comprises three holes 142 which may be used to secure the base plate 132 to the rest of the cordless kettle 102.

In order to be able to show the other components more clearly, in the foregoing Figures, the heating arrangement for the heating chamber 120, e.g. an underfloor hearing arrangement, is not shown. As will be appreciated by those skilled in the art, the corded kettle 2 or cordless kettle 102 described above and seen in the Figures may comprise any suitable heating arrangement as is well-known in the technical field of kettles and other liquid heating vessels.

In the embodiment discussed above, the kettle 102 comprises a series of LEDs 134 arranged to project light directly towards the plurality of transparent windows 114. However, depending on the particular arrangement of the internal components within the kettle 102, the desired cost of the kettle 102, the desired power consumption, along with many other factors, the kettle 102 may instead be provided with fewer LEDs and instead the LEDs may be arranged to direct light into a light diffusing element. As will be appreciated, by directing light into a light diffusing element it may be possible to distribute light from, for example, a single LED all the way around the periphery of the kettle 102. An example of a suitable light diffusing element may be a light guide such as a light ring. Although not illustrated, it will be appreciated that a light guide may conveniently be located in the space 122 between the inner wall 116 and exterior wall 104, for example a light ring extending around the periphery of the inner wall 116.

In the foregoing embodiments, instead of LEDs 134 any other suitable light source, for example comprising a standard bulb, may be provided.

The corded kettle 2, seen in Figures 1 and 2, may comprise identical internal components to those in the cordless kettle 102 seen in Figures 3 to 7, with the exception of the 360° cordless connector 128 which may be exchanged for a wired power supply cord.

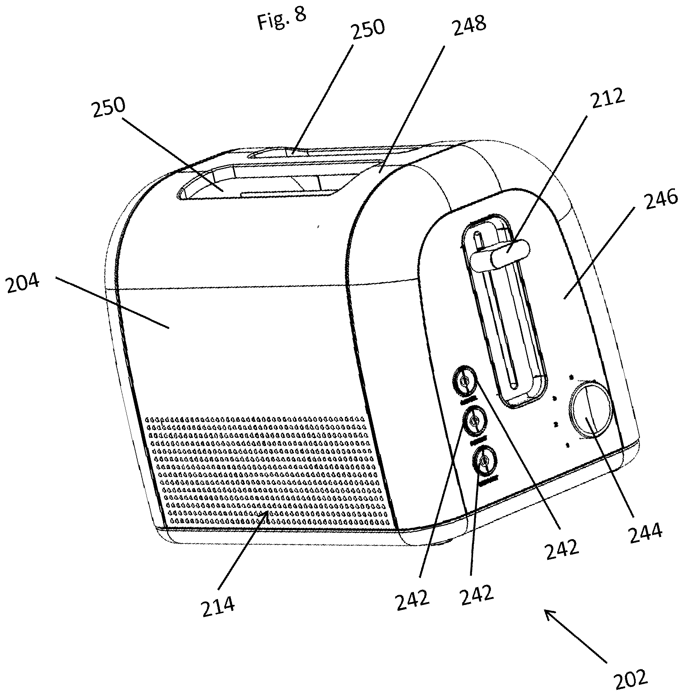

There is seen in Figure 8 a perspective view of a toaster 202 in accordance with a further embodiment of the present invention. The toaster 202 comprises a user input in the form of a lever 212. The lever 212 may be used to lower a food item into the toaster 202 and simultaneously initiate the heating cycle of the toaster 202. The toaster 202 comprises further user input buttons 242 and a control knob 244 which are arranged on an end wall 246 of the toaster 202. The input buttons 242 may have various functions such as to cancel a current heating cycle, reheat or defrost a food item. The control knob 244 may function as a browning control knob which enables the degree of browning of the food item to be controlled. The toaster 202 further comprises an upper wall 248 on which two slots 250 are provided to allow a user to put a food item into the toaster 202.

The toaster 202 comprises an exterior wall 204, but in the form of a flat side wall rather than frustoconical or cylindrical walls. Similarly to the kettle embodiments described above, the exterior wall 204 comprises a plurality of windows 214 distributed across the exterior wall 204 so as to extend from one side of the wall 204 to the other. The plurality of windows 214 is also arranged in a uniform array in the form of a series of rows of windows, similarly to the arrays seen in the kettle embodiments described above.

Whilst not seen in this Figure, the toaster 202 may comprise any suitable light source arranged on the inside of the toaster 202 to project light towards the plurality of windows 214. The toaster 102 may also have a 'double-walled' construction, i.e. comprising an inner wall that defines the heating chamber accessed through the two slots 250. The exterior wall 204 may be spaced from the inner wall 116 to define a compartment that accommodates one or more light sources, for example a plurality of LEDs may be mounted in such a compartment in a similar way to that seen in Figures 5-7. The plurality of transparent windows 214 is arranged to allow light to pass through the exterior wall 204 from the light source(s).

The opposing side of the toaster 202, not seen in this Figure, may comprise another exterior wall similar to exterior wall 204, i.e. in that it also comprises a plurality of windows 214 distributed across the other exterior wall. However, this is not essential and the opposing side of the toaster 202 may comprise another exterior wall without any windows.

## Claims

1. A domestic countertop appliance (2; 102) for heating a fluid contained therein, comprising:
an inner wall (116) forming a heating chamber (120), said heating chamber (120) defining a volume of fluid to be heated in an interior of the appliance (2; 102);
a heating arrangement (130) arranged to heat the volume of fluid; and
a first light source (134);
**characterised in that** the appliance further comprises:
one or more exterior wall(s) (4; 104) extending around the inner wall (116) and separated from the inner wall (116) to define a space (122) therebetween, at least one exterior wall (4; 104) comprising a plurality of at least partially transparent windows (14; 114) arranged to allow light to pass therethrough and the plurality of at least partially transparent windows (14; 114) being distributed across the exterior wall (4; 104); and
wherein the first light source (134) is arranged to project light into the space (122) towards a first portion comprising multiple ones of the plurality of at least partially transparent windows (14; 114) such that, in use, light generated by the first light source (134) passes through the first portion of the plurality of at least partially transparent windows (14; 114).

2. A domestic countertop appliance (2; 102) according to claim 1, further comprising a mounting bracket (124) arranged to support the first light source (134) in the space (122) between the inner wall (116) and the one or more exterior wall(s) (4; 104), wherein preferably the mounting bracket (124) is arranged in the space (122) to extend around the periphery of the inner wall (116).

3. A domestic countertop appliance (2; 102) according to claim 1 or 2, wherein the plurality of at least partially transparent windows (14; 114) comprises holes extending through at least part of the depth of the one or more exterior wall(s) (4; 104).

4. A domestic countertop appliance (2; 102) as claimed in claim 1 or 2, wherein at least part of the one or more exterior wall(s) (4; 104) is provided by an at least partially transparent material and the plurality of at least partially transparent windows (14; 114) are defined by or in a less transparent layer applied to or formed in the one or more exterior wall(s) (4; 104), and optionally wherein the less transparent layer is provided by a piece of material wrapped onto the one or more exterior wall(s) (4; 104).

5. A domestic countertop appliance (2; 102) according to any preceding claim, wherein the inner wall (116) consists of an opaque material.

6. A domestic countertop appliance (2; 102) according to any preceding claim, wherein the one or more exterior wall(s) (4; 104) consist of one or more materials that are different to the material of the inner wall (116).

7. A domestic countertop appliance (2; 102) according to any preceding claim, wherein the plurality of at least partially transparent windows (14; 114) is distributed across the exterior wall (4; 104) from one side of the exterior wall (4; 104) to another side of the exterior wall (4; 104).

8. A domestic countertop appliance (2; 102) according to any preceding claim, wherein the plurality of at least partially transparent windows (14; 114) comprises at least 50 windows (14; 114) and/or wherein the first portion comprises at least 10 of the plurality of at least partially transparent windows (14; 114).

9. A domestic countertop appliance (2; 102) according to any preceding claim, wherein the plurality of at least partially transparent windows (14; 114) is arranged in a uniform array.

10. A domestic countertop appliance (2; 102) as claimed in any preceding claim, wherein the plurality of at least partially transparent windows (14; 114) is distributed across the at least one exterior wall (4; 104) so as extend over at least 20% of a surface area of the at least one exterior wall (4; 104) and/or wherein the first portion comprises multiple ones of the plurality of at least partially transparent windows (14; 114) which are distributed across the at least one exterior wall (4; 104) so as extend over at least 10% of a surface area of the at least one exterior wall (4; 104).

11. A domestic countertop appliance (2; 102) according to any preceding claim, wherein the plurality of at least partially transparent windows (14; 114) is distributed across the at least one exterior wall (4; 104) so as to extend around an entire periphery of the appliance (2; 102).

12. A domestic countertop appliance (2; 102) as claimed in any preceding claim, wherein the first light source (134) is arranged to direct light into a light diffusing element arranged to project light towards the first portion comprising multiple ones of the plurality of at least partially transparent windows (14; 114), and wherein preferably the light diffusing element extends around the periphery of the heating chamber (120).

13. A domestic countertop appliance (2; 102) according to any preceding claim, wherein the appliance (2; 102) comprises at least one further light source (134) arranged to project light towards at least a second portion comprising different multiple ones of the plurality of at least partially transparent windows (14; 114).

14. A domestic countertop appliance (2; 102) according to claim 13, wherein the first light source (134) and the at least one further light source (134) are arranged so as to be independently controlled.

## Patentansprüche

1. Haushaltsgerät für die Arbeitsplatte (2; 102) zum Erwärmen einer darin enthaltenen Flüssigkeit, umfassend:
eine Innenwand (116), die eine Erwärmungskammer (120) bildet, wobei die Erwärmungskammer (120) ein zu erwärmendes Flüssigkeitsvolumen in einem Innenraum des Geräts (2; 102) definiert;
eine Erwärmungsanordnung (130), die angeordnet ist, um das Flüssigkeitsvolumen zu erwärmen; und
eine erste Lichtquelle (134);
**dadurch gekennzeichnet, dass** das Gerät weiter umfasst:
eine oder mehrere Außenwände (4; 104), die sich um die Innenwand (116) herum erstrecken und von der Innenwand (116) getrennt sind, um einen Raum (122) dazwischen zu definieren, wobei zumindest eine Außenwand (4; 104) die eine Vielzahl von zumindest teilweise transparenten Fenstern (14; 114) umfasst, die so angeordnet sind, um es Licht zu erlauben dort hindurchzugehen, und die Vielzahl von zumindest teilweise transparenten Fenstern (14; 114) über die Außenwand (4; 104) verteilt ist; und
wobei die erste Lichtquelle (134) angeordnet ist, um Licht in den Raum (122) in Richtung eines ersten Abschnitts zu projizieren, der mehrere aus der Vielzahl von zumindest teilweise transparenten Fenstern (14; 114) umfasst, so dass im Gebrauch von der ersten Lichtquelle (134) erzeugtes Licht durch den ersten Abschnitt der Vielzahl von zumindest teilweise transparenten Fenstern (14; 114) hindurchgeht.

2. Haushaltsgerät für die Arbeitsplatte (2; 102) nach Anspruch 1, weiter umfassend eine Konsole (124), die angeordnet ist, um die erste Lichtquelle (134) in dem Raum (122) zwischen der Innenwand (116) und der/den einen oder mehreren Außenwänden (4; 104) zu tragen, wobei die Konsole (124) vorzugsweise in dem Raum (122) angeordnet ist, um sich um den Umfang der Innenwand (116) herum zu erstrecken.

3. Haushaltsgerät für die Arbeitsplatte (2; 102) nach Anspruch 1 oder 2, wobei die Vielzahl der zumindest teilweise transparenten Fenster (14; 114) Löcher umfasst, die sich durch zumindest über einen Teil der Tiefe der einen oder mehreren Außenwände (4; 104) erstrecken.

4. Haushaltsgerät für die Arbeitsplatte (2; 102) nach Anspruch 1 oder 2, wobei zumindest ein Teil der einen oder mehreren Außenwände (4; 104) aus einem zumindest teilweise transparenten Material bereitgestellt ist und die Vielzahl von zumindest teilweise transparenten Fenstern (14; 114) durch oder in einer weniger transparenten Schicht definiert sind, die auf die eine oder die mehreren Außenwände (4; 104) aufgebracht oder darin gebildet ist, und wobei die weniger transparente Schicht optional durch ein Materialstück bereitgestellt wird, dass auf die eine oder die mehreren Außenwände (4; 104) gewickelt ist.

5. Haushaltsgerät für die Arbeitsplatte (2; 102) nach einem vorstehenden Anspruch, wobei die Innenwand (116) aus einem undurchsichtigen Material besteht.

6. Haushaltsgerät für die Arbeitsplatte (2; 102) nach einem vorstehenden Anspruch, wobei die eine oder die mehreren Außenwände (4; 104) aus einem oder mehreren Materialien bestehen, die sich von dem Material der Innenwand (116) unterscheiden.

7. Haushaltsgerät für die Arbeitsplatte (2; 102) nach einem vorstehenden Anspruch, wobei die Vielzahl der zumindest teilweise transparenten Fenster (14; 114) über die Außenwand (4; 104) von einer Seite der Außenwand (4; 104) zu einer anderen Seite der Außenwand (4; 104) verteilt ist.

8. Haushaltsgerät für die Arbeitsplatte (2; 102) nach einem vorstehenden Anspruch, wobei die Vielzahl der zumindest teilweise transparenten Fenster (14; 114) mindestens 50 Fenster (14; 114) umfasst und/oder wobei der erste Abschnitt mindestens 10 der Vielzahl von zumindest teilweise transparenten Fenstern (14; 114) umfasst.

9. Haushaltsgerät für die Arbeitsplatte (2; 102) nach einem vorstehenden Anspruch, wobei die Vielzahl der zumindest teilweise transparenten Fenster (14; 114) in einer gleichmäßigen Reihe angeordnet ist.

10. Haushaltsgerät für die Arbeitsplatte (2; 102) nach einem vorstehenden Anspruch, wobei die Vielzahl von zumindest teilweise transparenten Fenstern (14; 114) über die mindestens eine Außenwand (4; 104) verteilt ist, um sich über mindestens 20 % eines Oberflächenbereichs der mindestens einen Außenwand (4; 104) zu erstrecken; und/oder wobei der erste Abschnitt mehrere der Vielzahl von zumindest teilweise transparenten Fenstern (14; 114) umfasst, die über die mindestens eine Außenwand (4; 104) so verteilt sind, um sich über mindestens 10% eines Oberflächenbereichs der mindestens einen Außenwand (4; 104) zu erstrecken.

11. Haushaltsgerät für die Arbeitsplatte (2; 102) nach einem vorstehenden Anspruch, wobei die Vielzahl der zumindest teilweise transparenten Fenster (14; 114) über die mindestens eine Außenwand (4; 104) verteilt ist, um sich über den gesamten Umfang des Geräts (2; 102) zu erstrecken.

12. Haushaltsgerät für die Arbeitsplatte (2; 102) nach einem vorstehenden Anspruch, wobei die erste Lichtquelle (134) so angeordnet ist, um Licht in ein lichtstreuendes Element hinein zu lenken, dass angeordnet ist, um Licht auf den ersten Abschnitt zu projizieren, der mehrere der Vielzahl von zumindest teilweise transparenten Fenstern (14; 114) umfasst, und wobei sich das lichtstreuende Element vorzugsweise um den Umfang der Erwärmungskammer (120) herum erstreckt.

13. Haushaltsgerät für die Arbeitsplatte (2; 102) nach einem vorstehenden Anspruch, wobei das Gerät (2; 102) mindestens eine weitere Lichtquelle (134) umfasst, die angeordnet ist, um Licht auf mindestens einen zweiten Abschnitt zu projizieren, der mehrere verschiedene der Vielzahl von zumindest teilweise transparenten Fenstern (14; 114) umfasst.

14. Haushaltsgerät für die Arbeitsplatte (2; 102) nach Anspruch 13, wobei die erste Lichtquelle (134) und die mindestens eine weitere Lichtquelle (134) angeordnet sind, unabhängig voneinander gesteuert zu werden.

## Revendications

1. Appareil domestique pour plan de travail (2 ; 102) pour chauffer un fluide contenu en son sein, comprenant :
une paroi intérieure (116) formant une chambre chauffante (120), ladite chambre chauffante (120) définissant un volume de fluide à chauffer dans un intérieur de l'appareil (2 ; 102) ;
un agencement chauffant (130) agencé pour chauffer le volume de fluide ; et
une première source de lumière (134) ;
**caractérisé en ce que** l'appareil comprend en outre :
une ou plusieurs paroi(s) extérieure(s) (4 ; 104) s'étendant autour de la paroi intérieure (116) et séparée(s) de la paroi intérieure (116) pour définir un espace (122) entre ces dernières, au moins une paroi extérieure (4 ; 104) comprenant une pluralité de fenêtres au moins partiellement transparentes (14; 114) agencées pour permettre à la lumière de passer à travers ces dernières et la pluralité de fenêtres au moins partiellement transparentes (14 ; 114) étant répartie d'un bout à l'autre de la paroi extérieure (4 ; 104) ; et
dans lequel la première source de lumière (134) est agencée pour projeter de la lumière dans l'espace (122) vers une première portion comprenant de multiples fenêtres de la pluralité de fenêtres au moins partiellement transparentes (14 ; 114) de sorte que, lors de l'utilisation, de la lumière produite par la première source de lumière (134) passe à travers la première portion de la pluralité de fenêtres au moins partiellement transparentes (14 ; 114).

2. Appareil domestique pour plan de travail (2 ; 102) selon la revendication 1, comprenant en outre une patte de montage (124) agencée pour supporter la première source de lumière (134) dans l'espace (122) entre la paroi intérieure (116) et les une ou plusieurs paroi(s) extérieure(s) (4 ; 104), dans lequel de préférence la patte de montage (124) est agencée dans l'espace (122) pour s'étendre autour de la périphérie de la paroi intérieure (116).

3. Appareil domestique pour plan de travail (2 ; 102) selon la revendication 1 ou 2, dans lequel la pluralité de fenêtres au moins partiellement transparentes (14 ; 114) comprend des trous s'étendant à travers au moins une partie de la profondeur des une ou plusieurs paroi(s) extérieure(s) (4 ; 104).

4. Appareil domestique pour plan de travail (2 ; 102) selon la revendication 1 ou 2, dans lequel au moins une partie des une ou plusieurs paroi(s) extérieure(s) (4 ; 104) est fournie par une matière au moins partiellement transparente et la pluralité de fenêtres au moins partiellement transparentes (14 ; 114) est définie par ou dans une couche moins transparente appliquée à ou formée dans les une ou plusieurs paroi(s) extérieure(s) (4 ; 104), et de manière facultative dans lequel la couche moins transparente est fournie par une pièce de matière enroulée sur les une ou plusieurs paroi(s) extérieure(s) (4 ; 104).

5. Appareil domestique pour plan de travail (2 ; 102) selon une quelconque revendication précédente, dans lequel la paroi intérieure (116) consiste en une matière opaque.

6. Appareil domestique pour plan de travail (2 ; 102) selon une quelconque revendication précédente, dans lequel les une ou plusieurs paroi(s) extérieure(s) (4 ; 104) consiste(nt) en une ou plusieurs matières qui sont différentes de la matière de la paroi intérieure (116).

7. Appareil domestique pour plan de travail (2 ; 102) selon une quelconque revendication précédente, dans lequel la pluralité de fenêtres au moins partiellement transparentes (14 ; 114) est répartie d'un bout à l'autre de la paroi extérieure (4 ; 104) depuis un côté de la paroi extérieure (4 ; 104) jusqu'à un autre côté de la paroi extérieure (4 ; 104).

8. Appareil domestique pour de plan de travail (2 ; 102) selon une quelconque revendication précédente, dans lequel la pluralité de fenêtres au moins partiellement transparentes (14 ; 114) comprend au moins 50 fenêtres (14 ; 114) et/ou dans lequel la première portion comprend au moins 10 de la pluralité de fenêtres au moins partiellement transparentes (14 ; 114).

9. Appareil domestique pour plan de travail (2 ; 102) selon une quelconque revendication précédente, dans lequel la pluralité de fenêtres au moins partiellement transparentes (14 ; 114) est agencée en un groupement uniforme.

10. Appareil domestique pour plan de travail (2 ; 102) selon une quelconque revendication précédente, dans lequel la pluralité de fenêtres au moins partiellement transparentes (14 ; 114) est répartie d'un bout à l'autre de la au moins une paroi extérieure (4 ; 104) de façon à s'étendre sur au moins 20 % d'une superficie de la au moins une paroi extérieure (4 ; 104) et/ou dans lequel la première portion comprend des multiples fenêtres de la pluralité de fenêtres au moins partiellement transparentes (14 ; 114) qui sont réparties d'un bout à l'autre de la au moins une paroi extérieure (4 ; 104) de façon à s'étendre sur au moins 10% d'une superficie de la au moins une paroi extérieure (4 ; 104).

11. Appareil domestique pour plan de travail (2 ; 102) selon une quelconque revendication précédente, dans lequel la pluralité de fenêtres au moins partiellement transparentes (14 ; 114) est répartie d'un bout à l'autre de la au moins une paroi extérieure (4 ; 104) de façon à s'étendre autour d'une périphérie entière de l'appareil (2 ; 102).

12. Appareil domestique pour plan de travail (2 ; 102) selon une quelconque revendication précédente, dans lequel la première source de lumière (134) est agencée pour diriger de la lumière dans un élément de diffusion de lumière agencé pour projeter de la lumière vers la première portion comprenant des multiples fenêtres de la pluralité de fenêtres au moins partiellement transparentes (14 ; 114), et dans lequel de préférence l'élément de diffusion de lumière s'étend autour de la périphérie de la chambre chauffante (120).

13. Appareil domestique pour plan de travail (2 ; 102) selon une quelconque revendication précédente, dans lequel l'appareil (2 ; 102) comprend au moins une source de lumière supplémentaire (134) agencée pour projeter de la lumière vers au moins une seconde portion comprenant de multiples fenêtres différentes de la pluralité de fenêtres au moins partiellement transparentes (14 ; 114).

14. Appareil domestique pour plan de travail (2 ; 102) selon la revendication 13, dans lequel la première source de lumière (134) et la au moins une source de lumière supplémentaire (134) sont agencées de manière à être commandées indépendamment.
